# EUROPEAN PATENT APPLICATION

(11) **EP 3 653 366 A1**
(43) Date of publication of application: **20.05.2020**
(21) Application number: 18206410.5
(22) Date of filing: 15.11.2018
(51) Int. Cl.: B29C 65/22, B65B 31/04, B65B 51/14, B65B 57/00

(54) **HOUSEHOLD VACUUM SEALING MACHINE HAVING SAFETY STRUCTURE**

(71) Applicant: Bonsen Electronics Limited, San Tun Community, Hou Jie Town Dong Guan City, Guangdong 523941 (CN)
(72) Inventor: Xu, Ning, Dong Guan City,GuangDong, 523941 (CN)
(74) Representative: 2K Patentanwälte Blasberg Kewitz & Reichel

(57) **Abstract**

A household vacuum sealing machine having a safety structure contains: a base (1), a vacuum pump, a control unit, and a heating element (3). The control unit is electrically connected with the vacuum pump, the base includes a vacuuming groove (2), the vacuum pump is in connection with the vacuuming groove (2) via a vacuum tube, and the heating element (3) is fixed on the vacuuming groove (2). The heating element (3) includes multiple heating strips (31), an insulation sleeve (32), and multiple isolation layers (33). The multiple heating strips (31) are accommodated in the insulation sleeve (32), the insulation sleeve (32) extend to each heating strip (31), and the insulation sleeve (32) matingly contacts with the multiple isolation layers (33). A cover (4) is covered on the multiple isolation layers (33) and includes a hollow trough (41), wherein two ends of the hollow trough (41) extend to two sides of the cover (4) respectively, and a top of the heating element (3) extends out of the hollow trough (41).

## Description

### FIELD OF INVENTION

The present invention relates to a household vacuum sealing machine, and more particularly to the household vacuum sealing machine having a safety structure.

### BACKGROUND OF INVENTION

A conventional household vacuum sealing machine contains multiple heating strips arranged on a top of a base and powered by direct current (DC) power supply of low voltage, and an insulating tape layer is adhered on the multiple heating strips. But a buck converter is provided to reduce the voltage of the DC power supply, thus having high cost. Furthermore, the multiple heating strips are heated by the DC power supply slowly to heat seal a vacuum bag poorly.

Alternatively, the multiple heating strips are powered by supply mains and expose outside charging elements on a top of the base, thus scalding user's fingers. To overcome such a problem, an insulated tape layer is covered on the multiple heating strips and a power-off switch is provided. However, the insulated tap layer is thin and is pierced easily, and the power-off switch is failed as the household vacuum sealing machine operates.

### SUMMARY OF INVENTION

It is an object of the present invention to provide an enhanced household vacuum sealing machine of a simple and cost-efficient configuration enabling a safe and cost-efficient operation.

This problem is solved by a household vacuum sealing machine as claimed by claim 1. Further advantageous embodiments are the subject-matter of the dependent claims.

According to the present invention the household vacuum sealing machine has a safety structure and is powered by supply mains to eliminate current leakage and to comply with a test of high voltage

In accordance with the present invention, there is provided a household vacuum sealing machine having a safety structure containing: a base, a vacuum pump, a control unit, and a heating element.

The control unit is electrically connected with the vacuum pump, the base includes a vacuuming groove defined on the base, the vacuum pump is in connection with the vacuuming groove via a vacuum tube, the heating element is fixed on a side of the vacuuming groove.

The heating element includes multiple heating strips, an insulation sleeve, and multiple isolation layers, wherein the multiple heating strips are accommodated in the insulation sleeve, two ends of the insulation sleeve extend to two sides of each of the multiple heating strips, and the insulation sleeve matingly contacts with the multiple isolation layers, wherein a cover is covered on the multiple isolation layers and includes a hollow trough defined on a central position of the cover, two ends of the hollow trough extend to two sides of the cover respectively, and a top of the heating element extends out of the hollow trough.

Preferably, each isolation layer has multiple temperature-resist parts made of fabric material and multiple insulated conducting parts made of silicone, wherein each of the multiple temperature-resist parts is defined between any two adjacent insulated conducting parts, and a shape of each insulated conducting part corresponds to each temperature-resist part. A conductive spacer ring made of ceramic material is fitted between an inner surround section and an outer surround section of the insulation sleeve, conductively insulated powders are filled into the insulation sleeve and between the insulation sleeve and each temperature-resist part of each isolation layer.

According to the primary advantage of the present invention, a household vacuum sealing machine having a safety structure is powered by supply mains to eliminate current leakage and to comply with a test of high voltage.

### OVERVIEW ON DRAWINGS

Further benefits and advantages of the present invention will become apparent after a careful reading of the detailed description with appropriate reference to the accompanying drawings.

In the drawings:
FIG. 1 is a perspective view of a household vacuum sealing machine having a safety structure in accordance with a preferred embodiment of the present invention.
FIG. 2 is a perspective view of a part of the household vacuum sealing machine having the safety structure in accordance with the preferred embodiment of the present invention.
FIG. 3 is a cross sectional view showing the assembly of a part of the household vacuum sealing machine having the safety structure in accordance with the preferred embodiment of the present invention.

### DETAILED DESCRIPTION OF EMBODIMENTS

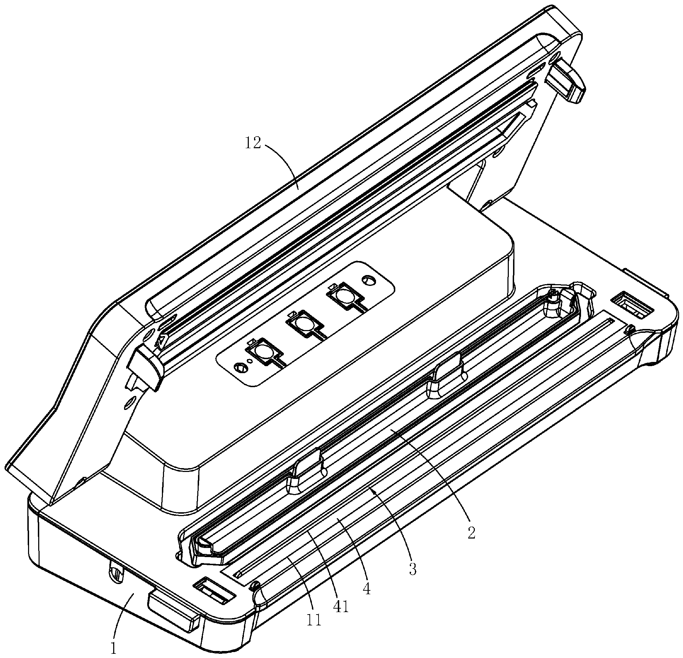

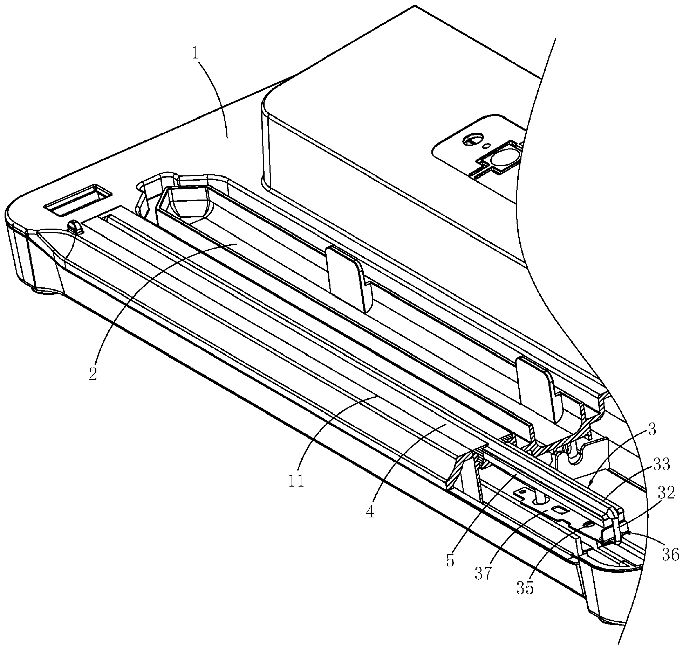

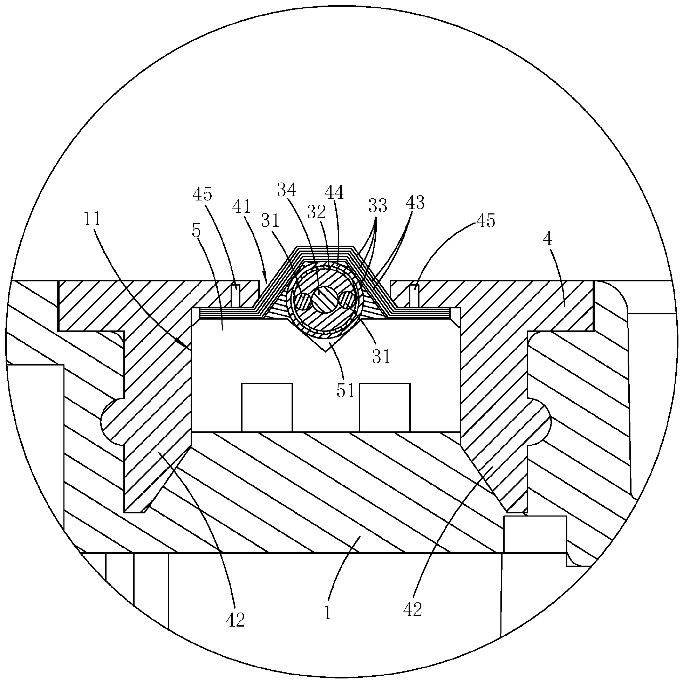

With reference to FIGS. 1-3, a household vacuum sealing machine having a safety structure according to a preferred embodiment of the present invention comprises: a cap or cover 12, a base 1, a vacuum pump, a control unit, and a heating element 3 powered on by supply mains.

The cap (cover) 12 is rotatably connected with the base 1. Tthe base 1 includes a vacuuming groove 2 defined on a top of the base 1, and two ends of the vacuuming groove 2 are proximate to two sides of the base 1 respectively. The base 1 includes an accommodation chamber 11 located on a side of the vacuuming groove 2 and being parallel to the vacuuming groove 2, wherein two sides of the accommodation chamber 11 extend to the two sides of the base 1 respectively.

The vacuum pump is in connection with the vacuuming groove 2 via a vacuum tube. The control unit is electrically connected with the vacuum pump, and the cap (cover) 12 is covered on the base 1, wherein the supply mains include alternating currents, a voltage of which is between 110V and 220V. For example, the voltage of the alternating currents is 110V or 220V

The heating element 3 is fixed on a side of the vacuuming groove 2, and the heating element 3 includes multiple heating strips 31, an insulation sleeve 32, and multiple isolation layers 33. The control unit and the multiple heating strips 31 are electrically connected with the supply mains. The multiple heating strips 31 are accommodated in the insulation sleeve 32, two ends of the insulation sleeve 32 extend to two sides of each of the multiple heating strips 31, and the insulation sleeve 32 matingly contacts with the multiple isolation layers 33 so as to enhance insulation and to avoid damage.

A cover 4 is covered on the multiple isolation layers 33 and includes a hollow trough 41 defined on a central position of the cover 4, wherein two ends of the hollow trough 41 extend to two sides of the cover 4 respectively, and a top of the heating element 3 extends out of the hollow trough 41 so as to heat seal an opening of a vacuum bag.

The heating element 3 includes the multiple heating strips 31 powered on by the supply mains, a nylon rope 34, the insulation sleeve 32, and the multiple isolation layers 33. The nylon rope 34 may be made of insulated nylon fibers. Two heating strips 31 are arranged around the nylon rope 34, and the insulation sleeve 32 accommodates the two heating strips 31. The two ends of the insulation sleeve 32 extend to the two sides of each of the multiple heating strips 31, the insulation sleeve 32 matingly contacts with the multiple isolation layers 33, and the multiple isolation layers 33 are covered by the cover 4. The cover 4 includes the hollow trough 41 defined on the central position thereof. The two ends of the hollow trough 41 extend to the two sides of the cover 4 respectively, and the top of the heating element 3 may extend out of the hollow trough 41 so as to heat seal the opening of the vacuum bag. The insulation sleeve 32 has high insulation and protection to eliminate current leakage and electric shock.

The heating element 3 includes two extensions 36 bending downward from two ends of the heating strips 31 individually and extending into the base 1. The two extensions 36 may have two terminals 35 crimped on two ends of the two extensions 36 respectively, the two ends of the insulation sleeve 32 extending to the two sides of each heating strip 31, and two ends of each of the multiple isolation layers 33 extending to the two extensions 36 individually. The two ends of the insulation sleeve 32 and the two ends of each isolation layer 33 cover the two sides of each heating strip 31, wherein the multiple heating strips 31 do not expose outside the insulation sleeve 32 and the multiple isolation layers 33, thus avoiding the current leakage and the electric shock.

The heating element 3 further includes a first electrode sheet 37 and a second electrode sheet which are arranged on the two sides of the base 1 respectively and are electrically connected with the supply mains. The two terminals 35 are a first terminal 35 and a second terminal 35 which may be crimped on two ends of each heating strip 31 respectively, wherein the first terminal 35 is fixed on the first electrode sheet 37, and the second electrode sheet has a spring, a first end of which is connected with the second electrode sheet, and a second end of the spring is connected with the second terminal 35 so as to pull the heating element 3 tightly.

The accommodation chamber 11 accommodates a separation seat 5, and the heating element 3 is mounted on a central portion of a top of the separation seat 5. The two ends of each isolation layer 33 partially abut against the top of the separation seat 5 individually. The cover 4 is retained with the accommodation chamber 11, and the two sides of the cover 4 contact with the two ends of each isolation layer 33 partially. Atop of the cover 4 may flush with the base 1. The width of the hollow trough 41 may be larger than a diameter of the insulation sleeve 32, and a width of the separation seat 5 may be larger than a diameter of the hollow trough 41. The heating element 3 extends out of the hollow trough 41.

The heating element 3 is secured on the base 1 and does not cause the current leakage and the electric shock by ways of the separation seat 5, thus protecting the heating element 3.

The separation seat 5 may include a V-shaped trench 51 defined on the central portion of the top thereof, wherein two ends of the V-shaped trench 51 extend to two sides of the separation seat 5 individually, and a cross section of the insulation sleeve 32 is circular. A lower portion of the insulation sleeve 32 may be retained in the V-shaped trench 51 so as to secure the heating element 3, thus obtaining heat sealing effect.

The separation seat 5 may further include two pressing platform arranged beside the two ends of the V-shaped trench 51 respectively, and the two ends of each isolation layer 33 respectively contact with the two pressing platforms beside the two sides of the separation seat 5 partially. The cover 4 may include two press portions formed on the two ends of the hollow trough 41 thereof respectively so as to abut against the two pressing platforms individually, wherein the two press portions contact with the two ends of each isolation layer 33 respectively, and a central portion of each isolation layer 33 protrudes upward with the insulation sleeve 32. The two ends of each isolation layer 33 may bend downward and may be fixed on the two pressing platform individually, thus fixing each isolation layer 33 firmly and protecting the heating element 3.

The top of the heating element 3 exposes outside the cover 4 so as to reduce a contacting area and friction of the heating element 3 and to protect the heating element 3. The cover 4 may contact with each isolation layer 33 so as to avoid a removal of each isolation layer 33 and to fix the heating element 3.

The cover 4 may further include multiple engagement segments 42 extending downward from the two sides of the cover 4 respectively, wherein the accommodation chamber 11 has two contacting portions formed on two bottoms of the two sides of the accommodation chamber 11 so as to retain with the multiple engagement segments 42 of the cover 4. Alternatively, the cover 4 is screwed with the base 1 by using at least one screw.

Preferably, each isolation layer 33 may have multiple temperature-resist parts made e.g. of fabric material and multiple insulated conducting parts 43 made e.g. of silicone, wherein each of the multiple temperature-resist parts may be defined between any two adjacent insulated conducting parts 43, and a shape of each insulated conducting part preferably corresponds to each temperature-resist part. Preferably, other elements made of insulation material may be defined in each isolation layer so as to enhance interface resistance and to reduce voltage when the current leakage occurs, thus preventing an electric arc.

Preferably, a conductive spacer ring 44 made e.g. of ceramic material is fitted between an inner surround section and an outer surround section of the insulation sleeve 32. Conductively insulated powders may be filled into the insulation sleeve 32 and between the insulation sleeve 32 and each temperature-resist part of each isolation layer 33.

Preferably, the conductive spacer ring 44 may be fitted to the inner surround section of the insulation sleeve 32, and the conductively insulated powders may be filled between the conductive spacer ring 44 and each isolation layer 33.

The conductively insulated material may be made of metal oxide powders, ceramic powders, and epoxy resin, wherein a weight ratio of the metal oxide powders, the ceramic powders, and the epoxy resin may be 1: 2-5: 0.1-0.2 so as to enhance heat conductivity. The ceramic powders and the epoxy resin are insulated and are not conductive to each other, and the ceramic powders are insulated and conductive, wherein the epoxy resin is bonded with the metal oxide powders and the ceramic powders, and the epoxy resin, the metal oxide powders and the ceramic powder are solidified. Preferably, the metal oxide powders conduct heat quickly, and the conductively insulated material may be filled into the insulation sleeve 32 fully so as to enhance contacting area and heat conductivity. Furthermore, a heat conductivity speed (thermal conductivity) of the conductively insulated material may be higher than the metal oxide powders, and the conductively insulated material may be insulated. The conductively insulated material may be semi-liquid and may be filled into the insulation sleeve 32 by ways e.g. of an injection gun before forming the insulation sleeve 32, and the conductively insulated material is solidified, thus eliminating a leakage gap of the insulation sleeve 32.

After connecting the insulation sleeve 32 and each isolation layer 33, the conductively insulated material is semi-liquid and is filled between the insulation sleeve 32 and each temperature-resist part by ways of the injection gun, and the conductively insulated material is solidified, thus eliminating the leakage gap between the insulation sleeve 32 and each temperature-resist part.

A resistance and a withstand voltage of the conductively insulated material may be higher than air so as to avoid the electric arc, when the current leakage occurs.

Preferably, the hollow trough 41 may accommodate two metal pieces 45, two ends of each metal piece 45 extending to the two ends of the hollow trough 41 individually, wherein the two metal pieces 45 are parallelly arranged beside two sides of the heating element 3. Two projection surfaces of two longitudinal planes of the two metal pieces 45 may be stacked inside a projection surface of the heating element 3. The two metal pieces 45 may be connected with the control unit via two wires respectively so as to form two capacitive sensing mediums so that two dielectric coefficients of the two capacitive sensing medium change. When the heating element 3 has the current leakage, a changing signal is produced. After the control unit receives the changing signal, it breaks off the supply mains, and the heating element 3 is powered off. Thereby, the heating element 3 is powered off/on. When the heating element 3 has the current leakage, the dielectric coefficients between the two metal pieces 45 change, wherein the two capacitive sensing mediums of the two metal pieces 45 have two different capacitance values respectively, by which the control unit determines whether the current leakage of the heating element 3 happens after receiving the two different capacitance values. When the current leakage of the heating element 3 happens, the control unit powers off the heating element 3 to avoid the electric shock. When the heating element 3 is powered on, it is sensed by the control unit to judge whether the heating element 3 has the electric leakage.

When a temperature of the heating element 3 changes, the two capacitive sensing mediums between the two metal pieces 45 change linearly. Accordingly, the control unit judges whether the heating element 3 is powered off, powered on, heated, or cooled after receiving the two different capacitance values. Preferably, an operation status of the heating element 3 is displayed by using an indicator light or a display screen.

The capacitive sensing mediums between the two metal pieces 45 may have a positive linear change when the temperature of the heating element 3 increases so as to calculate the temperature of the heating element 3, and the control unit displays the temperature of the heating element 3 after receiving the two different capacitance values.

The cover 4 may include two slots parallelly defined outside the hollow trough 41 and passing through a bottom of the cover 4, and the two slots may be covered by the top of the cover 4, wherein the two slots accommodate the two metal pieces 45 individually, and the two wires extend out of the two slots, thus obtaining sensitivity and stability of the two metal pieces 45.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the invention.

## Claims

1. A household vacuum sealing machine having a safety structure comprising:
a base (1), a vacuum pump, a control unit, and a heating element (3) powered on by supply mains;
the control unit being electrically connected with the vacuum pump, the base including a vacuuming groove (2) defined on the base (1), the vacuum pump being in connection with the vacuuming groove (2) via a vacuum tube, the heating element (3) being fixed on a side of the vacuuming groove (2), **characterized in that**:
the heating element (3) comprises multiple heating strips (31), an insulation sleeve (32), and multiple isolation layers (33), wherein
the multiple heating strips (31) are accommodated in the insulation sleeve (32),
two ends of the insulation sleeve (32) extend to two sides of each of the multiple heating strips (31), and
the insulation sleeve (32) matingly contacts with the multiple isolation layers (33), wherein
a cover (4) is covered on the multiple isolation layers (33) and comprises a hollow trough (41) defined on a central position of the cover (4),
two ends of the hollow trough (41) extend to two sides of the cover (4) respectively, and
a top of the heating element (3) extends out of the hollow trough (41).

2. The household vacuum sealing machine of claim 1, wherein the heating element (3) comprises a nylon rope (34), and two heating strips (31) are arranged around the nylon rope (34), wherein the heating element (3) comprises two extensions (36) bending downward from two ends of the heating strips (31) individually and extending into the base (1), the two extensions (36) have two terminals (35) crimped on two ends of the two extensions (36) respectively, the two ends of the insulation sleeve (32) extend to the two extensions (36), and two ends of each of the multiple isolation layers (33) extend to the two extensions (36) individually.

3. The household vacuum sealing machine of claim 1 or 2, wherein the base (1) further includes an accommodation chamber (11) located on a side of the vacuuming groove (2), the accommodation chamber (11) accommodates a separation seat (5), and the heating element (3) is mounted on a central portion of a top of the separation seat (5), wherein the two ends of each isolation layer (33) abut against the top of the separation seat (5) partially, the cover (4) is retained with the accommodation chamber (11), and the two sides of the cover (4) partially contact with the two ends of each isolation layer (33) individually.

4. The household vacuum sealing machine of any of the preceding claims, further comprising:
a cap (12) rotatably connected with the base (1) and covered on the base (1); wherein
the vacuuming groove (2) is defined on a top of the base (1),
two ends of the vacuuming groove (2) are proximate to two sides of the base (1) respectively, and
two sides of the accommodation chamber (11) extend to the two sides of the base (1) respectively.

5. The household vacuum sealing machine of any of the preceding claims, wherein
the heating element (3) further comprises a first electrode sheet (37) and a second electrode sheet which are arranged on the two sides of the base (1) respectively and are electrically connected with the supply mains; and
the two terminals (35) are a first terminal (35) and a second terminal (35) which are crimped on two ends of each heating strip (31) respectively, wherein
the first terminal (35) is fixed on the first electrode sheet (37), and
the second electrode sheet has a spring, a first end of which is connected with the second electrode sheet, and a second end of the spring is connected with the second terminal (35).

6. The household vacuum sealing machine of any of the preceding claims, wherein
each isolation layer (33) has multiple temperature-resist parts made of fabric material and multiple insulated conducting parts (43) made of silicone, wherein
each of the multiple temperature-resist parts is defined between any two adjacent insulated conducting parts (43), and
a shape of each insulated conducting part corresponds to each temperature-resist part; wherein
a conductive spacer ring (44) made of ceramic material is fitted between an inner surround section and an outer surround section of the insulation sleeve (32),
conductively insulated powders are filled into the insulation sleeve (32) and between the insulation sleeve (32) and each temperature-resist part of each isolation layer (33).

7. The household vacuum sealing machine of claim 6, wherein the conductively insulated material is made of metal oxide powders, ceramic powders, and epoxy resin, wherein a weight ratio of the metal oxide powders, the ceramic powders, and the epoxy resin is 1: 2-5: 0.1-0.2;
the conductively insulated material is semi-liquid and is filled into the insulation sleeve (32) by ways of an injection gun before forming the insulation sleeve (32), and the conductively insulated material is solidified, thus eliminating a leakage gap of the insulation sleeve (32);
after connecting the insulation sleeve (32) and each isolation layer (33), the conductively insulated material is semi-liquid and is filled between the insulation sleeve (32) and each temperature-resist part by ways of the injection gun, and the conductively insulated material is solidified, thus eliminating the leakage gap between the insulation sleeve (32) and each temperature-resist part.

8. The household vacuum sealing machine of any of the preceding claims, wherein
the hollow trough (41) accommodates two metal pieces (45), two ends of each metal piece (45) extend to the two ends of the hollow trough 41 individually, the two metal pieces (45) are parallelly arranged beside two sides of the heating element (3), and two projection surfaces of two longitudinal planes of the two metal pieces (45) are stacked inside a projection surface of the heating element (3); wherein
the two metal pieces (45) are connected with the control unit via two wires respectively so as to form two capacitive sensing mediums, and
two dielectric coefficients of the two capacitive sensing medium change to form a changing signal, such that the control unit breaks off the supply mains after receiving the changing signal.

9. The household vacuum sealing machine of claim 8, wherein
the cover (4) includes two slots parallelly defined outside the hollow trough (41) and passing through a bottom of the cover (4), and
the two slots are covered by the top of the cover (4),
wherein the two slots accommodate the two metal pieces (45) individually, and the two wires extend out of the two slots respectively.

10. The household vacuum sealing machine of claim 9, **characterized in that** the separation seat (5) includes a V-shaped trench (51) defined on the central portion of the top thereof, wherein two ends of the V-shaped trench (51) extend to two sides of the separation seat (5) individually, and a cross section of the insulation sleeve (32) is circular, wherein a lower portion of the insulation sleeve (32) is retained in the V-shaped trench (51).

11. The household vacuum sealing machine of claim 10, wherein the separation seat (5) further include two pressing platforms respectively arranged beside the two ends of the V-shaped trench (51), and the two ends of each isolation layer (33) individually contact with the two pressing platform beside the two sides of the separation seat (5) partially; the cover (4) includes two press portions formed on the two ends of the hollow trough (41) thereof respectively so as to abut against the two pressing platforms individually, wherein the two press portions contact with the two ends of each isolation layer (33) respectively, and a central portion of each isolation layer (33) protrudes upward with the insulation sleeve (32), the two ends of each isolation layer (33) bend downward and are fixed on the two pressing platforms individually.

## Amended claims

### Amended claims in accordance with Rule 137(2) EPC.

1. A household vacuum sealing machine having a safety structure comprising:
a base (1), a vacuum pump, a control unit, and a heating element (3) powered on by supply mains;
the control unit being electrically connected with the vacuum pump,
the base including a vacuuming groove (2) defined on the base (1),
the vacuum pump being in connection with the vacuuming groove (2) via a vacuum tube, and
the heating element (3) being fixed on a side of the vacuuming groove (2) and comprising an insulation sleeve (32); wherein
a cover (4) is provided comprising a hollow trough (41) defined on a central position of the cover (4),
two ends of the hollow trough (41) extend to two sides of the cover (4) respectively, and
a top of the heating element (3) extends out of the hollow trough (41);
**characterized in that**
the heating element (3) comprises multiple heating strips (31) and multiple isolation layers (33), wherein
the multiple heating strips (31) are accommodated in the insulation sleeve (32),
two ends of the insulation sleeve (32) extend to two sides of each of the multiple heating strips (31), and
the insulation sleeve (32) matingly contacts with the multiple isolation layers (33), wherein
the cover (4) is covered on the multiple isolation layers (33).

2. The household vacuum sealing machine of claim 1, wherein the heating element (3) comprises a nylon rope (34), and two heating strips (31) are arranged around the nylon rope (34), wherein the heating element (3) comprises two extensions (36) bending downward from two ends of the heating strips (31) individually and extending into the base (1), the two extensions (36) have two terminals (35) crimped on two ends of the two extensions (36) respectively, the two ends of the insulation sleeve (32) extend to the two extensions (36), and two ends of each of the multiple isolation layers (33) extend to the two extensions (36) individually.

3. The household vacuum sealing machine of claim 1 or 2, wherein the base (1) further includes an accommodation chamber (11) located on a side of the vacuuming groove (2), the accommodation chamber (11) accommodates a separation seat (5), and the heating element (3) is mounted on a central portion of a top of the separation seat (5), wherein the two ends of each isolation layer (33) abut against the top of the separation seat (5) partially, the cover (4) is retained with the accommodation chamber (11), and the two sides of the cover (4) partially contact with the two ends of each isolation layer (33) individually.

4. The household vacuum sealing machine of any of the preceding claims, further comprising:
a cap (12) rotatably connected with the base (1) and covered on the base (1); wherein
the vacuuming groove (2) is defined on a top of the base (1),
two ends of the vacuuming groove (2) are proximate to two sides of the base (1) respectively, and
two sides of the accommodation chamber (11) extend to the two sides of the base (1) respectively.

5. The household vacuum sealing machine of any of the preceding claims, wherein
the heating element (3) further comprises a first electrode sheet (37) and a second electrode sheet which are arranged on the two sides of the base (1) respectively and are electrically connected with the supply mains; and
the two terminals (35) are a first terminal (35) and a second terminal (35) which are crimped on two ends of each heating strip (31) respectively, wherein
the first terminal (35) is fixed on the first electrode sheet (37), and
the second electrode sheet has a spring, a first end of which is connected with the second electrode sheet, and a second end of the spring is connected with the second terminal (35).

6. The household vacuum sealing machine of any of the preceding claims, wherein
each isolation layer (33) has multiple temperature-resist parts made of fabric material and multiple insulated conducting parts (43) made of silicone, wherein
each of the multiple temperature-resist parts is defined between any two adjacent insulated conducting parts (43), and
a shape of each insulated conducting part corresponds to each temperature-resist part; wherein
a conductive spacer ring (44) made of ceramic material is fitted between an inner surround section and an outer surround section of the insulation sleeve (32),
conductively insulated powders are filled into the insulation sleeve (32) and between the insulation sleeve (32) and each temperature-resist part of each isolation layer (33).

7. The household vacuum sealing machine of claim 6, wherein the conductively insulated material is made of metal oxide powders, ceramic powders, and epoxy resin, wherein a weight ratio of the metal oxide powders, the ceramic powders, and the epoxy resin is 1: 2-5: 0.1-0.2;
the conductively insulated material is semi-liquid and is filled into the insulation sleeve (32) by ways of an injection gun before forming the insulation sleeve (32), and the conductively insulated material is solidified, thus eliminating a leakage gap of the insulation sleeve (32);
after connecting the insulation sleeve (32) and each isolation layer (33), the conductively insulated material is semi-liquid and is filled between the insulation sleeve (32) and each temperature-resist part by ways of the injection gun, and the conductively insulated material is solidified, thus eliminating the leakage gap between the insulation sleeve (32) and each temperature-resist part.

8. The household vacuum sealing machine of any of the preceding claims, wherein
the hollow trough (41) accommodates two metal pieces (45), two ends of each metal piece (45) extend to the two ends of the hollow trough 41 individually, the two metal pieces (45) are parallelly arranged beside two sides of the heating element (3), and two projection surfaces of two longitudinal planes of the two metal pieces (45) are stacked inside a projection surface of the heating element (3); wherein
the two metal pieces (45) are connected with the control unit via two wires respectively so as to form two capacitive sensing mediums, and
two dielectric coefficients of the two capacitive sensing medium change to form a changing signal, such that the control unit breaks off the supply mains after receiving the changing signal.

9. The household vacuum sealing machine of claim 8, wherein
the cover (4) includes two slots parallelly defined outside the hollow trough (41) and passing through a bottom of the cover (4), and
the two slots are covered by the top of the cover (4),
wherein the two slots accommodate the two metal pieces (45) individually, and the two wires extend out of the two slots respectively.

10. The household vacuum sealing machine of claim 9, **characterized in that** the separation seat (5) includes a V-shaped trench (51) defined on the central portion of the top thereof, wherein two ends of the V-shaped trench (51) extend to two sides of the separation seat (5) individually, and a cross section of the insulation sleeve (32) is circular, wherein a lower portion of the insulation sleeve (32) is retained in the V-shaped trench (51).

11. The household vacuum sealing machine of claim 10, wherein the separation seat (5) further include two pressing platforms respectively arranged beside the two ends of the V-shaped trench (51), and the two ends of each isolation layer (33) individually contact with the two pressing platform beside the two sides of the separation seat (5) partially; the cover (4) includes two press portions formed on the two ends of the hollow trough (41) thereof respectively so as to abut against the two pressing platforms individually, wherein the two press portions contact with the two ends of each isolation layer (33) respectively, and a central portion of each isolation layer (33) protrudes upward with the insulation sleeve (32), the two ends of each isolation layer (33) bend downward and are fixed on the two pressing platforms individually.
